# EUROPÄISCHE PATENTANMELDUNG

(11) **EP 3 517 888 A1**
(43) Veröffentlichungstag der Anmeldung: **31.07.2019**
(21) Anmeldenummer: 18153921.4
(22) Anmeldetag: 29.01.2018
(51) Int. Cl.: G01B 11/14, G01L 1/04

(54) **TAKTILES SENSORSYSTEM**

(71) Anmelder: SICK AG, 79183 Waldkirch/Breisgau (DE)
(72) Erfinder: Merettig, Gerhard, 79350 Sexau (DE); Köhl, Martin, 79183 Waldkirch (DE)
(74) Vertreter: Manitz Finsterwald Patent- und Rechtsanwaltspartnerschaft mbB

(57) **Zusammenfassung**

Ein taktiles Sensorsystem für einen Objektgreifer umfasst ein erstes Plattenelement mit einer Außenfläche und einer entgegengesetzten Innenfläche sowie ein zweites Plattenelement mit einer Außenfläche und einer entgegengesetzten Innenfläche. Die Außenfläche des ersten Plattenelements ist zur Befestigung an dem Objektgreifer ausgebildet. Die Außenfläche des zweiten Plattenelements ist für einen direkten oder indirekten Kontakt mit dem zu greifenden Objekt vorgesehen. Die Innenfläche des ersten Plattenelements ist über wenigstens ein elastisches Verbindungselement mit der Innenfläche des zweiten Plattenelements verbunden. Das Sensorsystem umfasst wenigstens einen Wegsensor zum Erfassen einer Verschiebung und/oder einer Drehung des zweiten Plattenelements relativ zum ersten Plattenelement.

## Beschreibung

Die vorliegende Erfindung betrifft ein taktiles Sensorsystem, beispielsweise ein taktiles Sensorsystem für einen Objektgreifer oder für ein Transportsystem.

Taktile Sensorsysteme sind Sensorsysteme, mit denen mechanische Berührungen detektiert und bewertet werden können.

Objektgreifer dienen in verschiedenen Industriezweigen zum kontrollierten Handhaben von Objekten wie Bauteilen, Baugruppen oder Produkten. Bei der Objekthandhabung kommen häufig Roboter zum Einsatz, die einen Objektgreifer als Endeffektor aufweisen.

Auf dem Gebiet der Objekthandhabung ist man bestrebt, die Zuverlässigkeit des Greifvorgangs und der Transportbewegung zu erhöhen, um Fehlpositionierungen zu vermeiden. Problematisch ist in der Praxis insbesondere ein Verrutschen der Objekte während der Positionierung. Ein solches Verrutschen von Objekten stellt auch beim Transport mittels Fahrzeugen oder Förderanlagen ein Problem dar.

Es ist eine Aufgabe der Erfindung, ein taktiles Sensorsystem anzugeben, das einfach und kostengünstig aufgebaut ist und ein zuverlässiges Ertasten von Objekten ermöglicht.

Die Lösung der Aufgabe erfolgt durch ein taktiles Sensorsystem mit den Merkmalen des Anspruchs 1.

Erfindungsgemäß umfasst ein taktiles Sensorsystem ein erstes Plattenelement mit einer Außenfläche und einer entgegengesetzten Innenfläche sowie ein zweites Plattenelement mit einer Außenfläche und einer entgegengesetzten Innenfläche, wobei die Außenfläche des ersten Plattenelements zur Befestigung an einer Objekthandhabungseinheit ausgebildet ist und die Außenfläche des zweiten Plattenelements für einen direkten oder indirekten Kontakt mit einem Objekt vorgesehen ist, und wobei die Innenfläche des ersten Plattenelements über wenigstens ein elastisches Verbindungselement mit der Innenfläche des zweiten Plattenelements verbunden ist, wobei das Sensorsystem wenigstens einen Wegsensor zum Erfassen einer Verschiebung und/oder einer Drehung des zweiten Plattenelements relativ zum ersten Plattenelement umfasst.

Bei der Objekthandhabungseinheit kann es sich um einen Objektgreifer handeln. Alternativ kann die Objekthandhabungseinheit z.B. ein Transportsystem, insbesondere ein Fahrzeug, sein. Die nachfolgenden Angaben nehmen zur Vereinfachung lediglich auf eine Verwendung eines erfindungsgemäßen taktilen Sensorsystems mit einem Objektgreifer sowie einem zu greifenden Objekt Bezug, sollen jedoch sinngemäß auch für eine Verwendung eines erfindungsgemäßen taktilen Sensorsystems mit einem Transportsystem sowie einem zu befördernden Objekt, oder für andere Objekthandhabungseinheiten, gelten.

Aufgrund der elastischen Verbindung kommt es bei einem Greifen und Umsetzen des Objekts zu einer Relativbewegung der Plattenelemente, die durch den Wegsensor detektierbar ist. Beispielsweise können sich die Plattenelemente beim Zugreifen, also Schließen des Objektgreifers quer zur Plattenebene aufeinander zu verschieben, und dies umso weiter, je größer die auf das Objekt ausgeübte Greifkraft ist. Bei einem Anheben des gegriffenen Objekts können sich die Plattenelemente parallel zur Plattenebene gegeneinander verschieben, und dies umso weiter, je schwerer das Objekt ist. Abgesehen von derartigen Verschiebungen kann es auch zu einer relativen Drehung der Plattenelemente kommen, also zum Beispiel zu einer Verkippung um eine parallel zur Plattenebene verlaufende Achse oder zu einer Drehung um eine quer zur Plattenebene verlaufende Achse. Zu solchen Drehungen kommt es insbesondere beim Anheben eines Objekts, das abseits seines Schwerpunkts gehalten wird. Auch Kombinationen unterschiedlicher Verschiebungen und Drehungen sind möglich.

Mittels des Wegsensors können aus den Verschiebungen und/oder Drehungen Rückschlüsse auf die Art des Objekts, insbesondere dessen Gewicht, Größe und Härte, auf die Greifposition und auf ein eventuelles Verrutschen des Objekts bei der Handhabung gezogen werden. Abgesehen von dem reinen Detektieren, also Bestätigen eines Verrutschens besteht für ein dem Sensorsystem zugeordnetes Steuergerät auch die Möglichkeit, Lernalgorithmen anzuwenden und die Greifprozesse fortlaufend anzupassen, um so ein Verrutschen künftig zu vermeiden. Ein erfindungsgemäßes Sensorsystem ist daher in der Lage, ein Objekt in ähnlicher Weise zu ertasten wie die menschliche Hand.

Die Plattenelemente können zumindest im Wesentlichen parallel zueinander angeordnet sein. Die Außenflächen und/oder die Innenflächen der Plattenelemente können zumindest im Wesentlichen eben sein, wobei dies nicht zwingend ist. Der plattenartige Charakter der Plattenelemente ist in der vorliegenden Offenbarung breit zu verstehen. Insbesondere können die Plattenelemente vergleichsweise dick sein oder eine unregelmäßige Kontur aufweisen. Bevorzugt ist jedoch eine möglichst flache Ausgestaltung der Plattenelemente.

Vorzugsweise sind das erste Plattenelement und das zweite Plattenelement aus einem formstabilen und/oder aus einem lichtundurchlässigen Material gebildet. Eine formstabile Ausführung stellt sicher, dass die Auswertungen der Sensorsignale nicht durch Deformationen der Plattenelemente verfälscht werden. Plattenelemente aus lichtundurchlässigem Material schirmen den Wegsensor von Umgebungslicht ab, was insbesondere den Einsatz eines optischen oder optoelektronischen Wegsensors erleichtert.

Eine Ausführungsform der Erfindung sieht vor, dass zwischen dem ersten Plattenelement und dem zweiten Plattenelement ein Freiraum gebildet ist und der Wegsensor wenigstens teilweise in dem Freiraum angeordnet ist. Dies ermöglicht eine besonders kompakte Ausführung. Der Freiraum kann in einfacher Weise dadurch gebildet sein, dass das elastische Verbindungselement wie ein Abstandhalter zwischen den Plattenelementen angeordnet ist, den entsprechenden Zwischenraum aber nicht vollständig ausfüllt.

Bevorzugt ist vorgesehen, dass in dem ersten Plattenelement und/oder in dem zweiten Plattenelement eine Aussparung gebildet ist und der Wegsensor wenigstens teilweise in der Aussparung angeordnet ist. Durch die Aussparung ist ein Hohlraum oder eine Kavität gebildet, in welcher der Wegsensor oder zumindest ein Teil desselben in Platz sparender und sicherer Weise untergebracht werden kann.

Vorzugsweise ist der Wegsensor bezüglich einer flächigen Erstreckung des ersten Plattenelements und/oder des zweiten Plattenelements zentral angeordnet. Eine solche mittige Anordnung ermöglicht eine relativ gleichmäßige Erfassung unterschiedlicher Verschiebungen und Drehungen der Plattenelemente.

Gemäß einer weiteren Ausführungsform der Erfindung ist das elastische Verbindungselement bezüglich mehrerer Richtungen elastisch, insbesondere wobei das elastische Verbindungselement ein richtungsabhängiges Elastizitätsmodul aufweist. Eine mehrdimensionale Elastizität erhöht die Flexibilität des Sensorsystems, weil unterschiedliche Krafteinwirkungen und Relativbewegungen erfassbar sind. Durch Vorsehen eines richtungsabhängigen Elastizitätsmoduls kann zwischen verschiedenen Arten von Krafteinwirkungen unterschieden werden, was die Leistungsfähigkeit des Sensorsystems erhöht.

Das Sensorsystem kann eine elektronische Steuereinrichtung umfassen, die mit dem Wegsensor in Signalverbindung steht und dazu ausgebildet ist, anhand der von dem Wegsensor erfassten Verschiebung und/oder Drehung des zweiten Plattenelements relativ zum ersten Plattenelement wenigstens eine taktile Kenngröße zu ermitteln, welche einen Objekthandhabungsvorgang der Objekthandhabungseinheit charakterisiert. Die elektronische Steuereinrichtung kann also dazu ausgebildet sein, aus den Erfassungen des Sensorsystems die Greifqualität des aktuellen Greifvorgangs zu ermitteln. Bei der taktilen Kenngröße kann es sich insbesondere um die Greifkraft, das Ausmaß eines festgestellten Verrutschens des Objekts, die Griffposition am Objekt oder das Objektgewicht handeln. Vorzugsweise ist die elektronische Steuereinrichtung dazu ausgebildet, mehrere solcher taktiler Kenngrößen zu ermitteln. Die elektronische Steuereinrichtung kann ferner dazu ausgebildet sein, anhand der taktilen Kenngröße einen vorbestimmten Greifablauf des Objektgreifers anzupassen, z. B. mittels eines adaptiven Algorithmus.

Der Wegsensor kann ein optoelektronischer Sensor sein. Optoelektronische Sensoren sind in vielfältigen Ausführungen bekannt und zeichnen sich durch hohe Genauigkeit und Zuverlässigkeit aus.

Gemäß einer Ausführungsform der Erfindung umfasst der Wegsensor einen an dem ersten oder dem zweiten Plattenelement angeordneten Lichtsender und einen an dem jeweils anderen Plattenelement angeordneten Lichtempfänger. Der Lichtsender sendet Lichtstrahlen in Richtung des Lichtempfängers. Bei einer Relativbewegung der beiden Plattenelemente ändert sich die Position und/oder die Größe des auf den Lichtempfänger auftreffenden Lichtflecks. Aus der Änderung der Lichtfleckposition und/oder der Lichtfleckgröße kann eine Auswerteeinrichtung die Stellungsänderung der Plattenelemente ermitteln.

Gemäß einer alternativen Ausführungsform der Erfindung umfasst der Wegsensor einen an dem ersten oder dem zweiten Plattenelement angeordneten Lichtsender, einen an dem betreffenden Plattenelement angeordneten Lichtempfänger und einen an dem jeweils anderen Plattenelement angeordneten Reflektor. Der Wegsensor kann also wie eine Lichtschranke aufgebaut sein.

Der Reflektor kann vollständig oder lediglich stellenweise verspiegelt sein. Durch eine stellenweise Verspiegelung kann insbesondere ein einzelnes Lichtstrahlenbündel oder eine Anordnung von mehreren einzelnen Lichtstrahlenbündeln erzeugt werden.

Grundsätzlich kann der Lichtsender eine Leuchtdiode, eine organische Leuchtdiode, und/oder eine Laserdiode, vorzugsweise einen Oberflächenemitter (verticalcavity surface-emitting laser, VCSEL), umfassen.

Es kann vorgesehen sein, dass der Lichtsender zum Aussenden mehrerer separater Lichtstrahlen oder Lichtstrahlenbündel ausgebildet ist und/oder dass der Lichtsender zum Aussenden wenigstens eines konvergenten oder divergenten Lichtstrahlenbündels ausgebildet ist und/oder dass der Lichtsender zum Aussenden eines strukturierten Lichtstrahlenbündels ausgebildet ist. Dies erweitert die Möglichkeiten zum Erfassen unterschiedlicher relativer Verschiebungen und/oder Drehungen der Plattenelemente. Beispielsweise können mehrere Lichtaustrittsöffnungen am Lichtsender vorgesehen sein. Bei Vorhandensein eines konvergenten oder divergenten Lichtstrahlenbündels kann eine Auswertung der Lichtfleckgröße Rückschlüsse auf den Abstand der Plattenelemente erlauben. Ein strukturiertes Lichtstrahlenbündel kann insbesondere ein einfach auszuwertendes Muster aufweisen, also zum Beispiel ring- oder kreuzförmig strukturiert sein.

Der Lichtsender kann derart ausgebildet und angeordnet sein, dass wenigstens eine Strahlachse eines auszusendenden Lichtstrahls oder Lichtstrahlenbündels schräg bezüglich einer Normalenebene des ersten Plattenelements und/oder des zweiten Plattenelements verläuft. Dies ist insofern günstig, als sich auch bei einer reinen Abstandsänderung der Plattenelemente ohne Verkippung oder Verdrehung eine Änderung der Position des Lichtflecks auf dem Lichtempfänger ergibt. Somit kann insbesondere auch eine Abstandsbestimmung anhand des Triangulationsprinzips erfolgen.

Grundsätzlich umfasst der Lichtempfänger vorzugsweise eine Fotodioden-Anordnung oder eine ortsauflösende Fotodiode. Eine Auswertung der Lichtfleckposition ermöglicht hierbei in einfacher Weise eine Positionsbestimmung der Plattenelemente. Vorzugsweise umfasst der Lichtempfänger einen als anwendungsspezifische integrierte Schaltung (ASIC) ausgeführten Detektorchip mit mehreren Fotodioden-Anordnungen und einer integrierten Auswerteelektronik.

Anstelle eines optoelektronischen Sensors könnte grundsätzlich auch ein kapazitiver oder ein induktiver Sensor als Wegsensor vorgesehen sein. Beispielsweise könnte eine Plattenkondensator-Anordnung an den Plattenelementen vorgesehen sein.

Gemäß einer weiteren Ausführungsform der Erfindung ist das erste Plattenelement unter Ausbildung einer elastischen Klebeverbindung mit dem zweiten Plattenelement verklebt. Bei dieser Ausgestaltung ist das elastische Verbindungselement durch ein elastisches Klebstoffvolumen gebildet. Dies ermöglicht eine besonders einfache und kostengünstige Fertigung. Außerdem beansprucht das Klebstoffvolumen nur wenig Bauraum.

In das Klebstoffvolumen der elastischen Klebeverbindung können Partikel eingebettet sein, deren Elastizitätsmodul sich von dem Elastizitätsmodul des verwendeten Klebstoffs unterscheiden. Auf diese Weise kann das resultierende Gesamt-Elastizitätsmodul des Klebstoffvolumens angepasst werden. Insbesondere kann durch eine Einbettung elastischer Füllstoffe in den Klebstoff eine Richtungsabhängigkeit der Elastizität erzielt werden.

Eine richtungsabhängige Elastizität kann auch dadurch herbeigeführt werden, dass das Klebstoffvolumen eine unregelmäßige Form oder einen unregelmäßigen Verlauf aufweist.

Prinzipiell könnte das elastische Verbindungselement auch eine Feder, einen Gummipuffer oder eine Anordnung mehrerer solcher Elemente umfassen.

Eine spezielle Ausgestaltung der Erfindung sieht vor, dass die Innenfläche des ersten Plattenelements wenigstens abschnittsweise schräg zur Innenfläche des zweiten Plattenelements verläuft oder dass die Innenfläche des ersten Plattenelements oder des zweiten Plattenelements zu der Innenfläche des jeweils anderen Plattenelements hin gewölbt ist. Durch eine solche Ausgestaltung kann insbesondere vermieden werden, dass die Plattenelemente bei einer Verkippung aneinander anstoßen.

Das Sensorsystem kann für eine drahtlose Energieversorgung ausgelegt sein. Insbesondere kann das Sensorsystem Mittel zur induktiven Kopplung mit einer Energieübertragungseinheit, insbesondere eine integrierte oder separate Spule, aufweisen. Dies erleichtert die Integration in einen beweglichen Objektgreifer.

Es ist bevorzugt, dass das Sensorsystem für eine hohe Messrate, beispielsweise von 1 kHz, ausgelegt ist. Dies ermöglicht die Beurteilung dynamischer Größen, insbesondere von Objektschwingungen und Rutschvorgängen.

Es kann vorgesehen sein, dass wenigstens ein weiterer Wegsensor, ein Beschleunigungssensor, ein Lagesensor, ein Temperatursensor und/oder ein Feuchtigkeitssensor in das Sensorsystem integriert ist/sind. Dem Sensorsystem werden somit erweiterte Fähigkeiten beim Ertasten von Objekten verliehen, die den taktilen Fähigkeiten der menschlichen Hand nachempfunden sind.

Das Sensorsystem kann wenigstens ein weiteres Plattenelement umfassen, das mittels eines weiteren elastischen Verbindungselements mit dem zweiten Plattenelement verbunden ist. Es kann also insbesondere eine gestapelte Anordnung von drei oder mehr elastisch verbundenen Plattenelementen vorgesehen sein.

Gemäß einer weiteren Ausführungsform der Erfindung umfasst das Sensorsystem wenigstens einen weiteren Wegsensor zum Erfassen einer Verschiebung und/oder einer Drehung des zweiten Plattenelements relativ zum ersten Plattenelement, wobei die Wegsensoren voneinander beabstandet sind. Hierdurch kann die Genauigkeit des Sensorsystems gesteigert werden.

Um temperatur- und alterungsbedingte Änderungen der elastischen Eigenschaften des Verbindungselements auszugleichen, könnte eine Steuereinrichtung des Sensorsystems zum Durchführen einer Referenzmessung ausgebildet sein, insbesondere in regelmäßigen Abständen. Bei einer solchen Referenzmessung könnte der zugehörige Objektgreifer im Rahmen einer Leerfahrt eine Drehung durchführen, sodass das Gewicht des Sensorsystems bei jeder Achse einmal positiv und einmal negativ bewertet wird. Unter der Annahme, dass das Gewicht konstant ist, können hierbei Änderungen des Elastizitätsmoduls des elastischen Verbindungselements ermittelt und gegebenenfalls bei der weiteren Auswertung berücksichtigt werden. Alternativ oder zusätzlich könnte ein Referenzobjekt bereitgestellt werden, das die beim Greifen und Handhaben ausgeübten Kräfte mit separaten, vorzugsweise besonders präzisen Messgeräten ermitteln kann. Ein derartiges Referenzobjekt kann in regelmäßigen Abständen mit unterschiedlichen Kräften gegriffen werden, um das Elastizitätsmodul nachfolgend entsprechend abzugleichen. Zusätzlich könnte das Referenzobjekt eine Inspektionskamera oder dergleichen zur Überprüfung der Sauberkeit und zur Sicherung der Produktqualität umfassen.

Die Erfindung betrifft auch einen Roboter, insbesondere einen Industrieroboter, mit einer Basis, einer Kinematik und einem an der Kinematik angeordneten Objektgreifer, der wenigstens zwei Greifelemente umfasst, die aufeinander zu und voneinander weg bewegbar sind, um ein Objekt wahlweise zu greifen und freizugeben.

Erfindungsgemäß ist in wenigstens eines der Greifelemente ein taktiles Sensorsystem wie vorstehend beschrieben integriert. Dadurch kann der Roboter das handzuhabende Objekt ertasten oder erfühlen und so mögliche Unregelmäßigkeiten bei der Objekthandhabung, insbesondere ein Verrutschen des Objekts, feststellen.

Die Basis kann ortsfest oder beweglich sein. Insbesondere kann also der Roboter zum Beispiel auch Teil eines führerlosen Transportsystems (automated guided vehicle, AGV) sein.

Die Greifelemente können als Greifbacken, Greifplatten oder Greiferfinger ausgebildet sein. Das taktile Sensorsystem ist vorzugsweise gekapselt an einer Kontaktplatte des Objektgreifers angeordnet. Es können auch zwei oder mehr Sensorsysteme pro Greifelement vorgesehen sein, um die Tastfähigkeit zu steigern.

Vorzugsweise ist in jedes der Greifelemente wenigstens ein taktiles Sensorsystem wie vorstehend beschrieben integriert.

Die Erfindung betrifft auch ein Transportsystem zum Befördern von Objekten, die in einem Ladebereich des Transportsystems abgelegt sind.

Erfindungsgemäß ist an oder in dem Ladebereich ein wie vorstehend beschriebenes taktiles Sensorsystem vorgesehen. Mittels des taktilen Sensorsystems ist es möglich, den Transport zu überwachen und insbesondere ein Verrutschen von Objekten im Ladebereich festzustellen oder rechtzeitig zu verhindern. Das erste Plattenelement des taktilen Sensorsystems kann zu diesem Zweck auf einer Objektauflagefläche des Ladebereichs befestigt sein, so dass ein zu transportierendes Objekt beim Auflegen in Kontakt mit dem zweiten Plattenelement gelangt. Das taktile Sensorsystem kann jedoch auch zwischen einem Grundrahmen des Transportsystems und einer den Ladebereich bildenden Objektauflage angeordnet sein.

Vorzugsweise ist das Transportsystem als Fahrzeug, insbesondere als führerloses Transportsystem (automated guided vehicle, AGV), ausgeführt.

Das taktile Sensorsystem kann derart angeordnet und ausgestaltet sein, dass eine während des Transports auf ein transportiertes Objekt wirkende Fliehkraft ermittelbar ist. Dadurch ist es zum Beispiel möglich, die Geschwindigkeit des Transportsystems in einer Kurve rechtzeitig vor einem Verrutschen oder Kippen des Objekts zu verringern. Durch eine solche Sicherheitsmaßnahme können beispielsweise Transportstrecken mit Kurven insgesamt schneller bewältigt werden.

Weiterbildungen der Erfindung sind auch in den abhängigen Ansprüchen, der Beschreibung sowie den beigefügten Zeichnungen angegeben.

Die Erfindung wird nachfolgend beispielhaft anhand der Zeichnungen beschrieben.
- Fig. 1: ist eine vereinfachte Querschnittsansicht eines Sensorsystems gemäß einer ersten Ausführungsform der Erfindung.
- Fig. 2: zeigt ein Sensorsystem gemäß einer zweiten Ausführungsform der Erfindung.
- Fig. 3: zeigt ein Sensorsystem gemäß einer dritten Ausführungsform der Erfindung.
- Fig. 4: zeigt ein Sensorsystem gemäß einer vierten Ausführungsform der Erfindung.
- Fig. 5: zeigt einen optoelektronischen Sensor eines erfindungsgemäßen Sensorsystems in einer Seitenansicht.
- Fig. 6: ist eine Draufsicht auf einen Lichtsender eines erfindungsgemäßen Sensorsystems.
- Fig. 7: zeigt alternative Formgebungen für den Lichtsender der Fig. 6.
- Fig. 8: ist eine Draufsicht auf einen Lichtempfänger eines erfindungsgemäßen Sensorsystems.
- Fig. 9: zeigt ein Sensorsystem gemäß einer fünften Ausführungsform der Erfindung.
- Fig. 10: zeigt ein Sensorsystem gemäß einer sechsten Ausführungsform der Erfindung.
- Fig. 11: zeigt ein Sensorsystem gemäß einer siebten Ausführungsform der Erfindung.
- Fig. 12: zeigt ein Sensorsystem gemäß einer achten Ausführungsform der Erfindung.
- Fig. 13: zeigt einen Objektgreifer eines erfindungsgemäßen Roboters in einer ersten Greifsituation sowie zugehörige Lichtflecke auf einem Lichtempfänger eines in den Objektgreifer integrierten Sensorsystems.
- Fig. 14: zeigt einen Objektgreifer eines erfindungsgemäßen Roboters in einer zweiten Greifsituation sowie zugehörige Lichtflecke auf einem Lichtempfänger eines in den Objektgreifer integrierten Sensorsystems.
- Fig. 15: zeigt einen Objektgreifer eines erfindungsgemäßen Roboters in einer dritten Greifsituation sowie zugehörige Lichtflecke auf einem Lichtempfänger eines in den Objektgreifer integrierten Sensorsystems.
- Fig. 16: zeigt einen Objektgreifer eines erfindungsgemäßen Roboters in einer vierten Greifsituation sowie zugehörige Lichtflecke auf einem Lichtempfänger eines in den Objektgreifer integrierten Sensorsystems.
- Fig. 17: zeigt einen Objektgreifer eines erfindungsgemäßen Roboters in einer fünften Greifsituation sowie zugehörige Lichtflecke auf einem Lichtempfänger eines in den Objektgreifer integrierten Sensorsystems.
- Fig. 18: zeigt in vereinfachter Form einen kapazitiven Wegsensor eines anderen erfindungsgemäßen Sensorsystems.

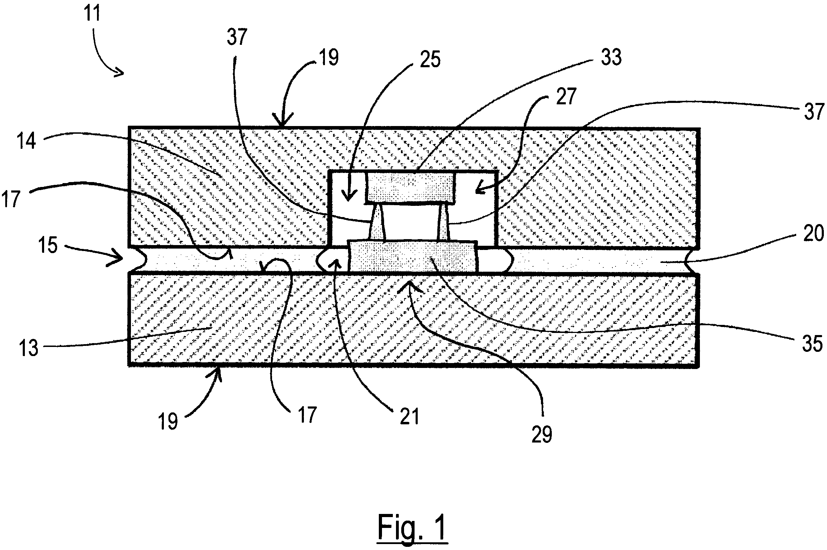

Das in Fig. 1 dargestellte, gemäß einer ersten Ausführungsform der Erfindung gestaltete taktile Sensorsystem 11 umfasst zwei Plattenelemente 13, 14 aus einem formstabilen Material wie zum Beispiel Metall sowie ein elastisches Verbindungselement 15 zur Kopplung der beiden Plattenelemente 13, 14. Die Plattenelemente 13, 14 sind parallel zueinander angeordnet und weisen jeweilige, aufeinander zu weisende Innenflächen 17 sowie voneinander weg weisende Außenflächen 19 auf. Das elastische Verbindungselement 15 ist eine elastische Klebstoffschicht 20, mittels welcher die Plattenelemente 13, 14 an den Innenflächen 17 miteinander verklebt sind. Die Klebstoffschicht 20 kann wie dargestellt eine zentrale Ausnehmung 21 aufweisen. Die Plattenelemente 13, 14 könnten auch durch mehrere separate Klebstoffschichten 20 miteinander verklebt sein. Anstelle einer zentralen Ausnehmung 21 könnte die Klebstoffschicht 20 auch eine Aussparung in einem Eckbereich der Plattenelemente 13, 14 oder mehrere Ausnehmungen in Eckbereichen der Plattenelemente 13, 14 aufweisen.

In dem im Bild oberen Plattenelement 14 ist eine zentrale Aussparung 25 ausgebildet, die mit der zentralen Ausnehmung 21 der Klebstoffschicht 20 fluchtet. In dem durch die Ausnehmung 21 der Klebstoffschicht 20 und die Aussparung 25 des oberen Plattenelements 14 gebildeten Hohlraum 27 ist ein Wegsensor 29 angeordnet. Der Wegsensor 29 ist als optoelektronischer Sensor ausgeführt und umfasst einen Lichtsender 33, der an der Innenfläche 17 des im Bild oberen Plattenelements 14 befestigt ist. Ein Lichtempfänger 35 des Wegsensors 29 ist an der Innenfläche 17 des im Bild unteren Plattenelements 13 befestigt. Bei dem Lichtsender 33 handelt es sich bevorzugt um eine Leuchtdiode oder eine Laserdiode, während der Lichtempfänger 35 bevorzugt als Fotodioden-Array ausgebildet ist. Der Lichtsender 33 sendet mehrere Lichtstrahlenbündel 37 in Richtung des Lichtempfängers 35. Die Lichtstrahlenbündel 37 können je nach Anwendung gemeinsam oder getrennt angesteuert werden. Der Lichtempfänger 35 könnte alternativ auch mit einer integrierten Auswerteschaltung ausgeführt sein. Beispielsweise könnte eine CMOS-Schaltung mit lichtempfindlichen Bereichen vorgesehen sein.

Wenn sich die beiden Plattenelemente 13, 14 relativ zueinander bewegen, also zum Beispiel parallel zu den Innenflächen 17 zueinander verschieben, ihren Abstand ändern oder sich gegeneinander drehen oder verkippen, ändern sich die Positionen und/oder die Größen der von den Lichtstrahlenbündeln 37 erzeugten Lichtflecke auf dem Lichtempfänger 35. Eine mit dem Lichtempfänger 35 in Signalverbindung stehende, nicht dargestellte Auswerteeinrichtung des Sensorsystems 11 kann somit die aktuelle Stellung der Plattenelemente 13, 14 relativ zueinander erkennen und bewerten.

Wenn die Außenfläche 19 eines der Plattenelemente 13, 14 am Objektgreifer eines Roboters (nicht dargestellt) befestigt ist, erfolgt bei einem Ergreifen eines Objekts infolge des Kontakts des Objekts mit dem anderen Plattenelement 13, 14 eine geringfügige relative Stellungsänderung der Plattenelemente 13, 14, die von dem Wegsensor 29 detektiert wird. Durch ein erfindungsgemäßes Sensorsystem 11 ist es somit möglich, einen Objektgreifer mit einer Tastfähigkeit zu versehen.

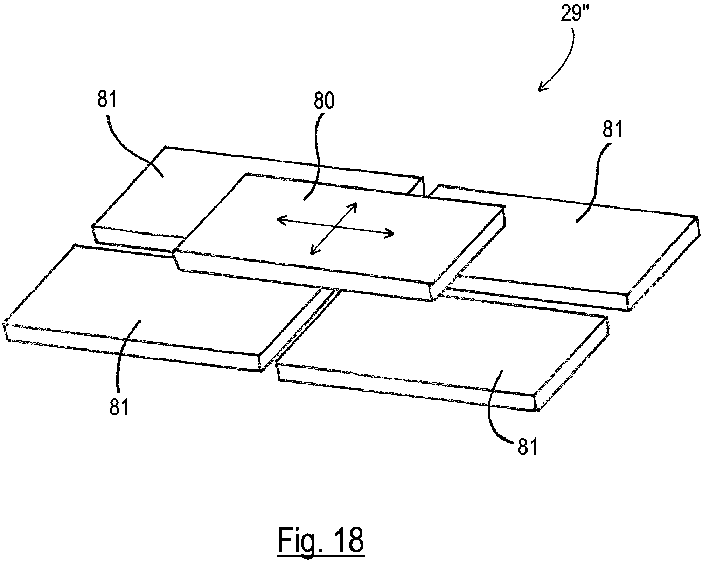

Der Wegsensor 29 muss nicht zwingend als optoelektronischer Sensor ausgeführt sein, sondern kann zum Beispiel auch ein kapazitiver (Fig. 18) oder ein induktiver Sensor sein.

Als elastisches Verbindungselement 15 kann anstelle der Klebstoffschicht 20 ein Federelement vorgesehen sein, z. B. eine Schraubenfeder oder eine Wellenfeder.

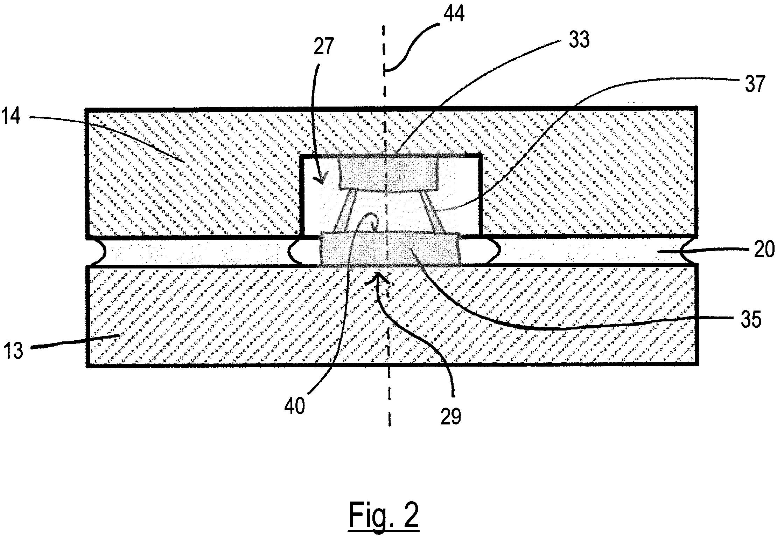

Die in Fig. 2 gezeigte zweite Ausführungsform der Erfindung ist weitgehend identisch mit der ersten Ausführungsform, wobei jedoch die Lichtstrahlenbündel 37 nicht rechtwinklig auf die Empfangsfläche 40 des Lichtempfängers 35 auftreffen, sondern schräg. Die Lichtstrahlenbündel 37 verlaufen also schräg zu einer optischen Achse 44 des Wegsensors 29. Mittels Triangulation kann deshalb auch ohne Auswertung der Lichtfleckgröße eine zuverlässige Bestimmung des Abstands der beiden Plattenelemente 13, 14 erfolgen.

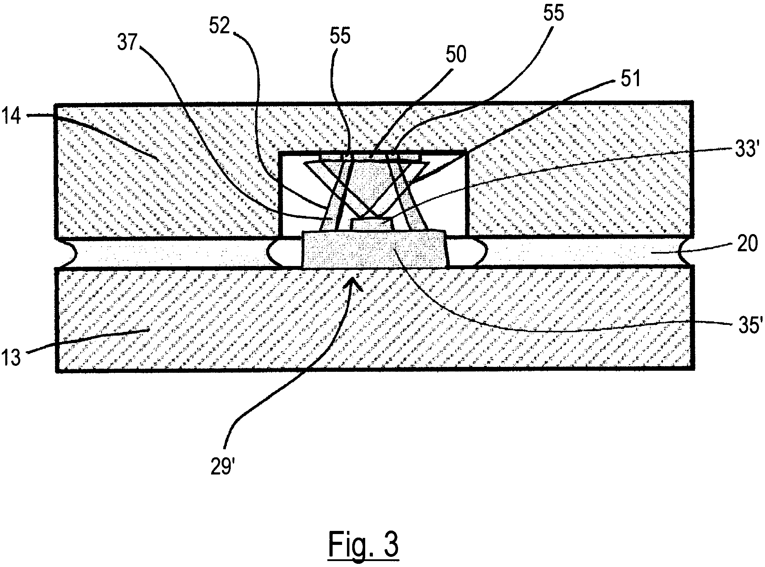

Fig. 3 zeigt eine dritte Ausführungsform der Erfindung. Der Lichtsender 33' und der Lichtempfänger 35' des Wegsensors 29' sind hier an demselben Plattenelement 13 befestigt, während am anderen Plattenelement 14 ein Reflektor 50 befestigt ist. Der Lichtsender 33' kann wie dargestellt auf oder alternativ neben dem Lichtempfänger 35' angeordnet sein. Die von dem Lichtsender 33' ausgesendeten Sendelichtstrahlen 51 werden am Reflektor 50 reflektiert und gelangen als Empfangslichtstrahlen 52 zum Lichtempfänger 35'. Der Reflektor 50 ist bei dem gezeigten Ausführungsbeispiel ein plattenartiges Bauteil, das mit Ausnahme einzelner kleiner Spiegelflächen 55 eine lichtabsorbierende Oberfläche aufweist. Dies dient der Erzeugung einzelner Lichtstrahlenbündel 37, die in grundsätzlich gleicher Weise ausgewertet werden können wie die direkt vom Lichtsender 33 erzeugten Lichtstrahlenbündel 37 gemäß Fig. 1 und 2.

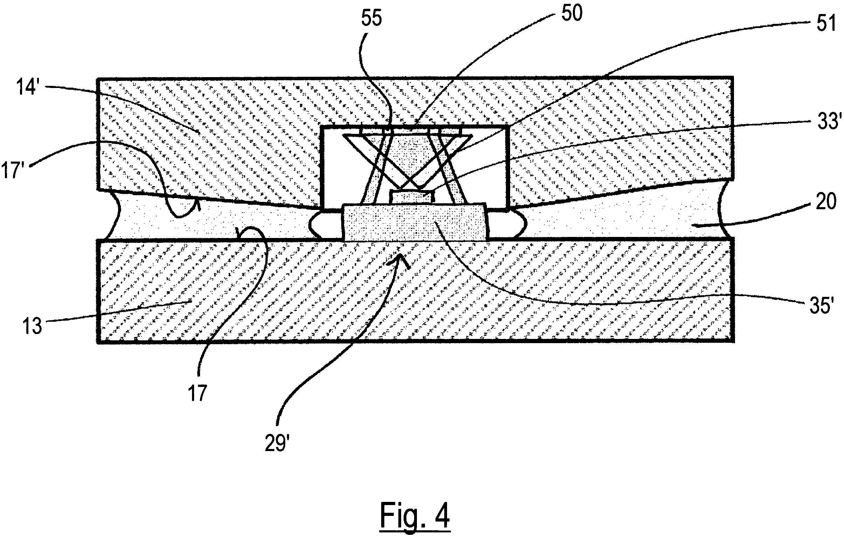

Die in Fig. 4 gezeigte vierte Ausführungsform der Erfindung ist weitgehend identisch mit der dritten Ausführungsform, wobei jedoch die Innenfläche 17' des im Bild oberen Plattenelements 14' nicht eben ausgeführt ist, sondern in Richtung des Wegsensors 29' verlaufende Schrägen aufweist. Dadurch wird ein Anstoßen der Plattenelemente 13, 14' aneinander im Falle einer Verkippung vermieden. Das Plattenelement 14' könnte zu diesem Zweck auch eine abgerundete Innenfläche aufweisen. Ebenso könnten beide Plattenelemente 13, 14 geschrägt oder gerundet sein.

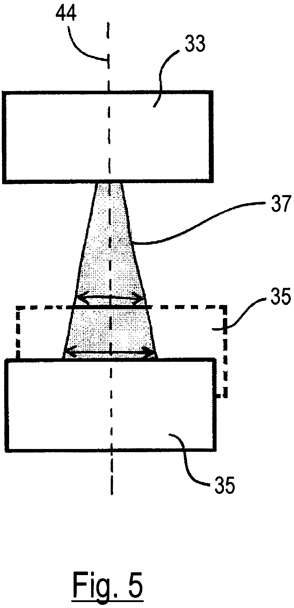

Der Abstand der Plattenelemente 13, 14 eines erfindungsgemäßen taktilen Sensorsystems 11 kann insbesondere durch Auswertung der Lichtfleckgröße auf dem Lichtempfänger 35 ermittelt werden, wie in Fig. 5 verdeutlicht ist. Das Lichtstrahlenbündel 37 ist zu diesem Zweck divergent. Die Abstrahlcharakteristik des Lichtsenders 33 kann mittels einer oder mehrerer Blenden sowie Mikrolinsen in einer gewünschten Weise geformt werden. Wenn der Lichtempfänger 35 gemäß der gestrichelten Darstellung näher an den Lichtsender 33 heranrückt, wird der Lichtfleck auf dem Lichtempfänger 35 kleiner. Aus dieser Verkleinerung kann die Abstandsänderung bezogen auf die optische Achse 44 ermittelt werden.

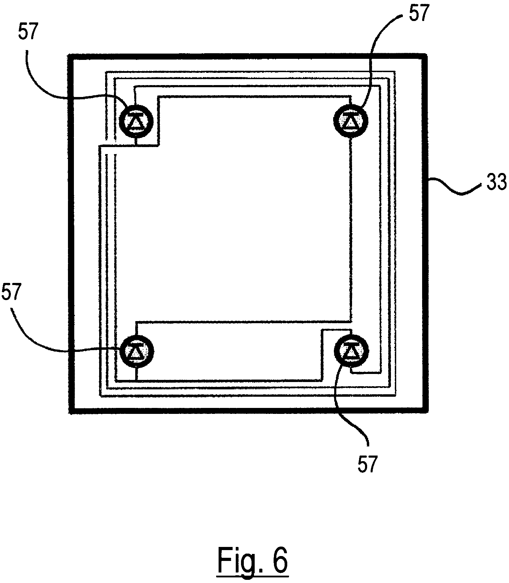

Fig. 6 ist eine Draufsicht auf einen beispielhaften Lichtsender 33, der zur Verwendung in einem erfindungsgemäßen Sensorsystem 11 (Fig. 1) vorgesehen ist. Der Lichtsender 33 ist als, vorzugsweise monolithische, Leuchtdiode mit mehreren Lichtaustrittsstellen 57 ausgebildet. Dies ermöglicht es einem zugehörigen Wegsensor 29, außer Verschiebungen auch Drehungen der Plattenelemente 13, 14 in einfacher Weise zu erkennen. Es könnten auch mehrere separate zum Beispiel in einem Muster angeordnete Leuchtdioden vorgesehen sein.

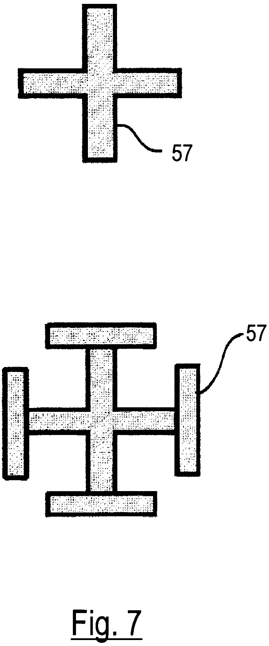

Die Lichtaustrittsstellen 57 können in einer speziellen Weise geformt sein, wie dies anhand zweier Beispiele in Fig. 7 dargestellt ist. Die Detektionsleistung des zugehörigen Wegsensors 29 kann dadurch gesteigert werden. Prinzipiell könnten die Lichtaustrittsstellen 57 auch wie standardisierte Schriftzeichen geformt sein.

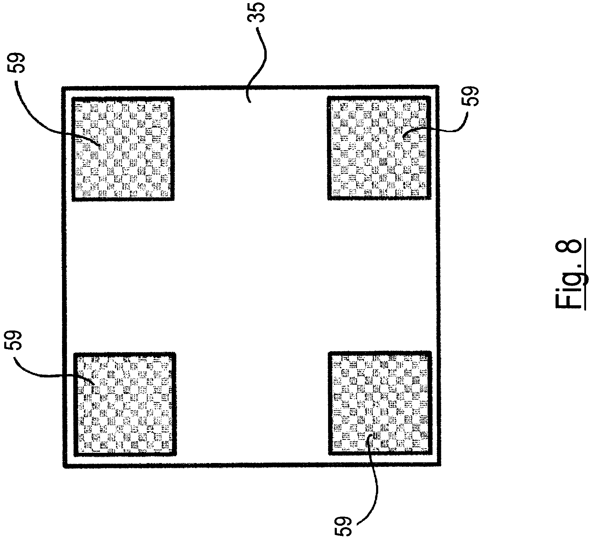

Fig. 8 ist eine Draufsicht auf einen beispielhaften Lichtempfänger 35, der zur Verwendung in einem erfindungsgemäßen Sensorsystem 11 (Fig. 1) vorgesehen ist. Der Lichtempfänger 35 ist als integrierter Schaltkreis mit mehreren separaten Fotodiodenflächen 59 ausgebildet. Zwischen den Fotodiodenflächen 59 befindet sich Platz für Signalverarbeitungs- und Auswertungskomponenten. Beispielsweise könnte der Lichtempfänger 35 eine Kantenlänge von etwa 4 mm aufweisen, während die Fotodiodenflächen 59 jeweils eine Kantenlänge von etwa 1 mm aufweisen. Es könnten auch getrennte Fotodioden vorgesehen sein. Eine integrierte Ausführung in einem einzelnen Schaltkreis, z. B. ASIC, ist jedoch besonders kompakt und kostengünstig. In den Detektorbaustein können insbesondere Verstärkungs-, Speicherungs-, Umwandlungs-, Verrechnungs- und Logikkomponenten sowie ein Sendetreiber und eine Kommunikationsschnittstellen-Komponente integriert sein.

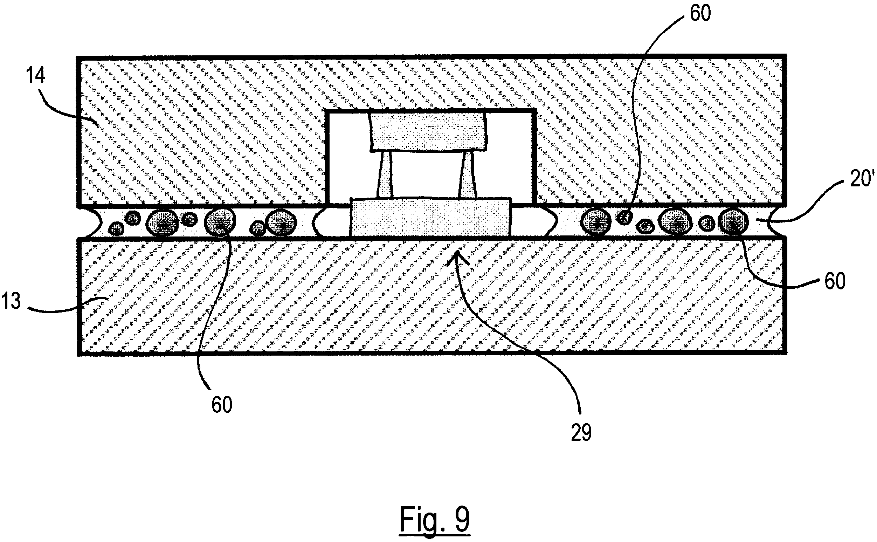

Bei bestimmten Anwendungen könnte es vorteilhaft sein, wenn die Ortsauflösung des Wegsensors 29 für verschiedene Raumrichtungen unterschiedlich ist. Dies kann beispielsweise durch ein richtungsabhängiges Elastizitätsmodul des elastischen Verbindungselements 15 bewirkt werden. Falls eine Klebstoffschicht 20' das elastische Verbindungselement 15 bildet, könnten wie in Fig. 9 dargestellt Partikel 60 in die Klebstoffschicht 20' eingebettet sein, die ein anderes Elastizitätsmodul aufweisen als der Klebstoff. Bei in unterschiedlichen Raumrichtungen unterschiedlicher Verteilung der Partikel 60 ergibt sich eine Richtungsabhängigkeit des Elastizitätsmoduls.

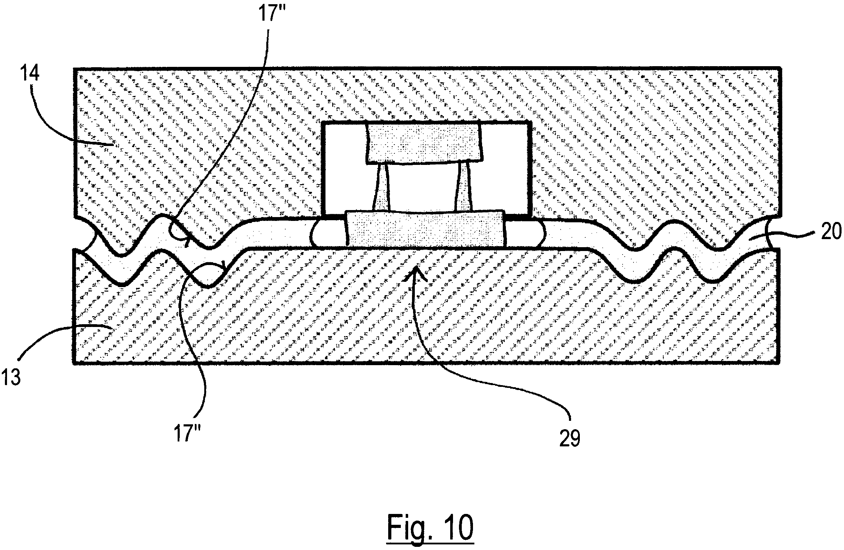

Eine andere, in Fig. 10 gezeigte Möglichkeit zur Realisierung einer richtungsabhängigen Elastizität besteht in einer unregelmäßigen Formgebung der Innenflächen 17" in wenigstens einer bestimmten Betrachtungsrichtung, die sich von der Formgebung in wenigstens einer weiteren Betrachtungsrichtung unterscheidet. Diese Variante kann auch mit der Gestaltung der Klebstoffschicht 20' gemäß Fig. 9 kombiniert sein. Grundsätzlich könnten auch Federn mit verschiedenen Federhärten und unterschiedlicher Ausrichtung vorgesehen sein.

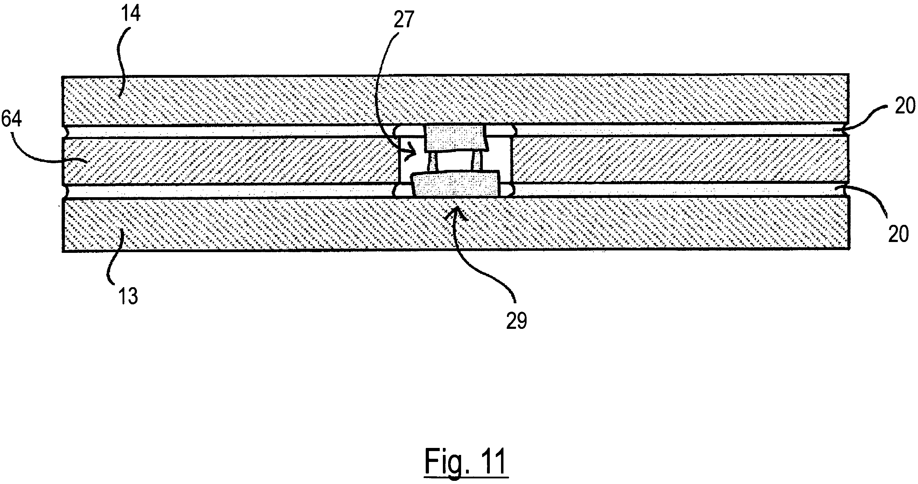

Fig. 11 zeigt eine Ausführungsform der Erfindung, welche auf drei gestapelt angeordneten und durch jeweilige elastische Klebstoffschichten 20 miteinander verbundenen Plattenelementen 13, 14, 64 beruht.

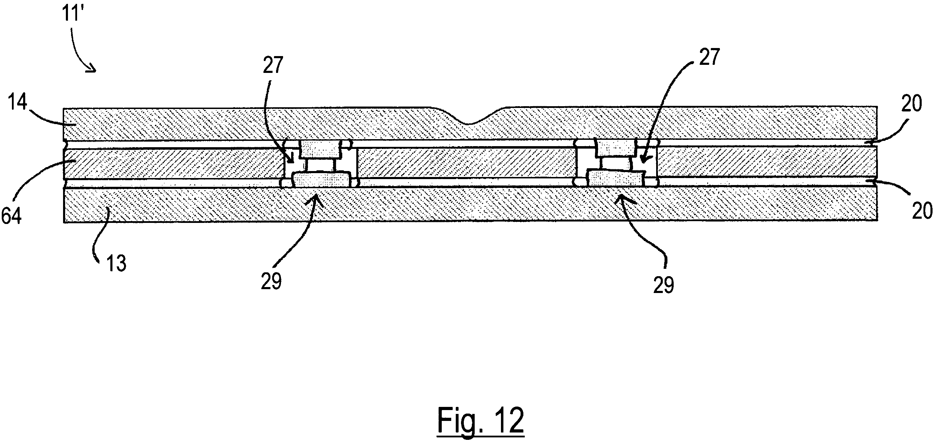

Gemäß der in Fig. 12 dargestellten Ausführungsform umfasst ein erfindungsgemäßes Sensorsystem 11' zwei Wegsensoren 29, die voneinander beabstandet in jeweiligen Hohlräumen 27 angeordnet sind. Dies ermöglicht eine besonders hohe Positionsauflösung des Sensorsystems 11' und eine verbesserte Feststellung einer Verkippung.

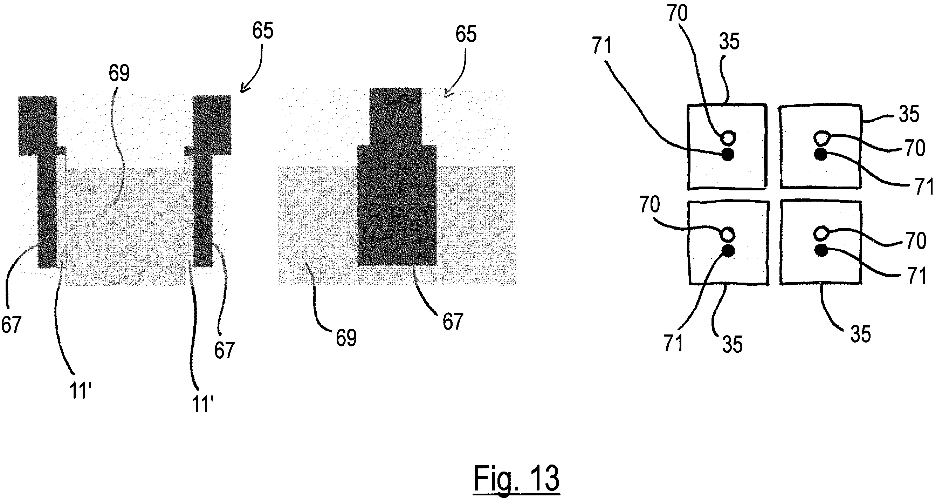

In den Fig. 13-17 ist jeweils ein Objektgreifer 65 in zwei verschiedenen Seitenansichten dargestellt. Der Objektgreifer 65 bildet den Endeffektor eines Roboters und umfasst zwei Greifelemente 67, die motorisch aufeinander zu und voneinander weg bewegbar sind, um ein Objekt 69 wie z. B. ein Bauteil oder ein Produkt zu greifen und freizugeben.

An den zum Objekt 69 weisenden Seiten der Greifelemente 67 sind jeweilige Sensorsysteme 11' befestigt, die wie in Fig. 12 gezeigt ausgeführt sind. Der Objektgreifer 65 kann damit ein Objekt 69 ertasten, das heißt beim Greifen und Handhaben des Objekts 69 Informationen über das Objekt 69, dessen Position sowie die Qualität des Greif- und Handhabungsvorgangs erlangen.

Im rechten Teil von Fig. 13 sind Lichtflecke 70, 71 auf den Lichtempfängern 35 gezeigt, wobei die hellen Lichtflecke 70 einem Ausgangszustand des Objektgreifers 65 und die dunklen Lichtflecke 71 dem dargestellten Endzustand des Objektgreifers 65 entsprechen. In der Abbildung links sind die gegenüberliegenden Lichtempfänger 35 des einen Paars von Wegsensoren 29 dargestellt, während rechts die gegenüberliegenden Lichtempfänger 35 des beabstandeten zweiten Paars von Wegsensoren 29 dargestellt sind.

Fig. 13 bezieht sich auf einen Endzustand des Objektgreifers 65, in welchem er das Objekt 69 angehoben hat. Die objektseitigen Plattenelemente der Sensorsysteme 11' werden aufgrund des Gewichts des Objekts 69 geringfügig nach unten gezogen. Wenn sich jeweils die Lichtsender an den objektseitigen Plattenelementen und die Lichtempfänger an den objektfernen Plattenelementen befinden, werden die Lichtflecke 71 auf den Lichtempfängern beim Anheben nach unten verschoben. Diese Verschiebung ist umso stärker, je höher das Gewicht des Objekts 69 ist.

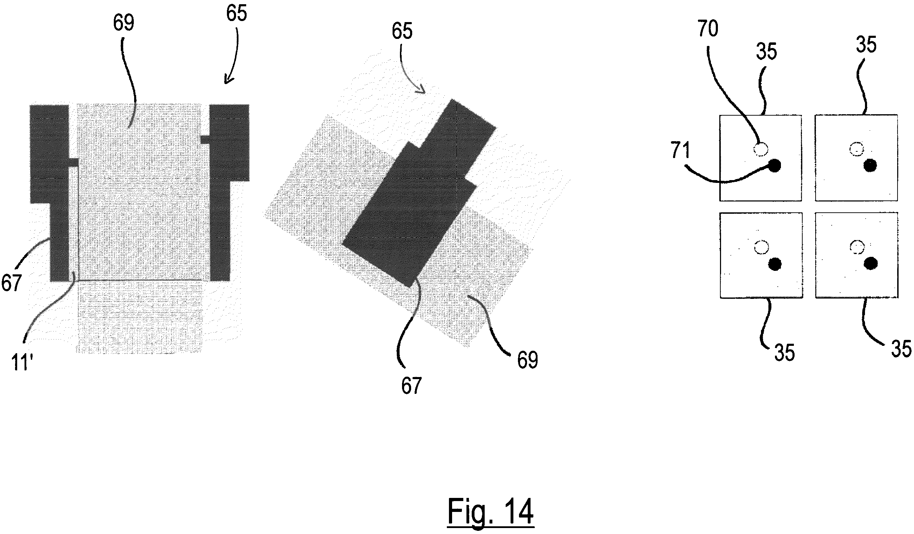

In Fig. 14 hält der Objektgreifer 65 das Objekt 69 schräg, woraus eine diagonale Verschiebung der Lichtflecke 71 resultiert.

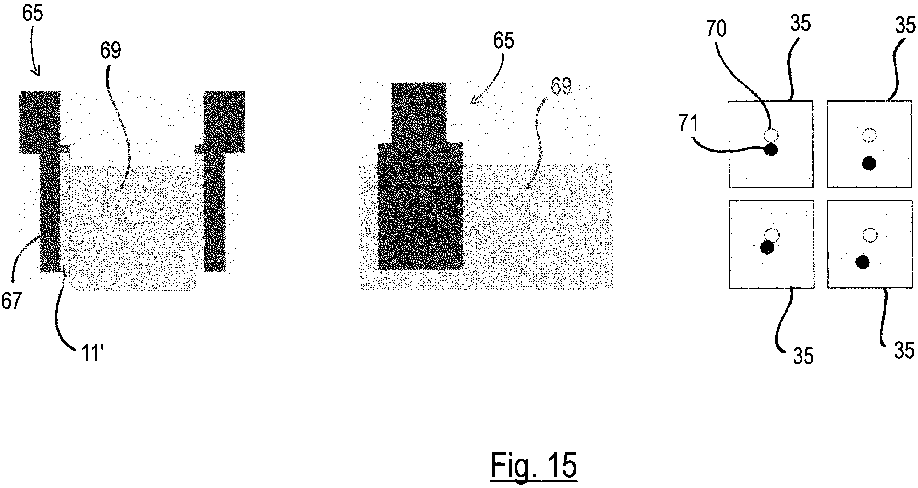

In Fig. 15 hat der Objektgreifer 65 das Objekt 69 außermittig gegriffen. Beim Anheben ergibt sich somit eine asymmetrische Verteilung der Lichtflecke 71.

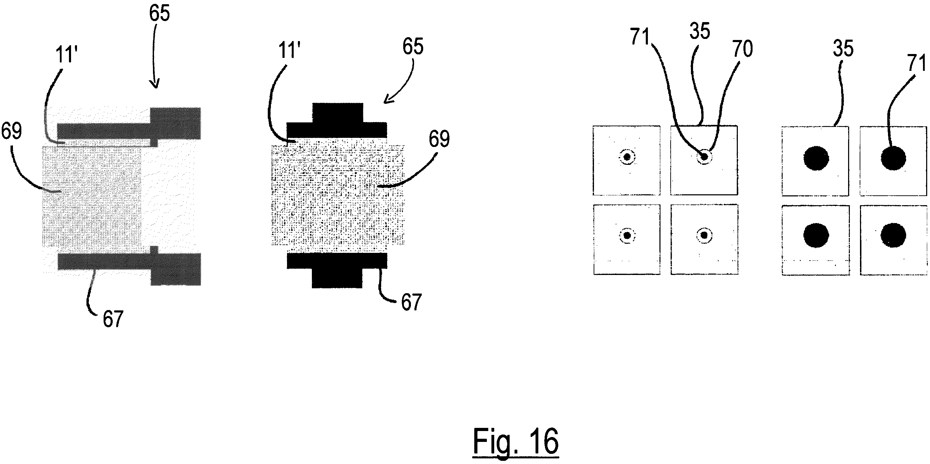

Wenn der Objektgreifer 65 wie in Fig. 16 dargestellt derart gedreht ist, dass sich ein Greifelement 67 oben und ein Greifelement 67 unten befindet, ergibt sich für die oberen Lichtempfänger 35 eine Vergrößerung der Lichtflecke 71 und für die unteren Lichtempfänger 35 eine Verkleinerung der Lichtflecke 71. Zur Verdeutlichung ist das Ausmaß an Vergrößerung und Verkleinerung übertrieben dargestellt.

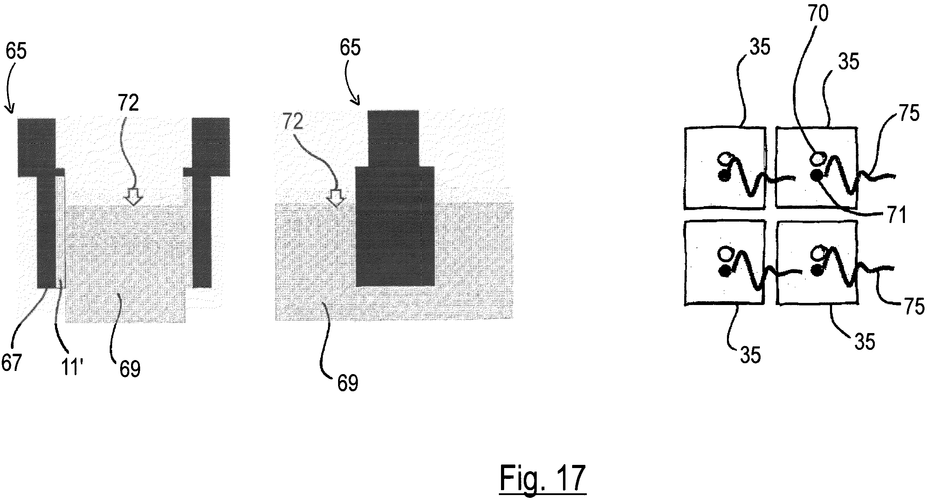

Wenn während des Transports ein Objekt 69 verrutscht, wie in Fig. 17 durch einen Pfeil 72 angegeben, wird für eine kurze Zeit keine Last mehr detektiert. Danach ist die Last aber wieder vorhanden. Somit kann anhand dieses charakteristischen zeitlichen Verlaufs ein Verrutschen erkannt werden. Die zur Verdeutlichung gezeigten Kurven 75 stellen die Position der Lichtflecke 71 als Funktion der Zeit dar.

In Fig. 18 ist ein Ausführungsbeispiel eines kapazitiven Wegsensors 29" für ein erfindungsgemäßes Sensorsystem, beispielsweise das Sensorsystem 11 der Fig. 1, gezeigt. Der kapazitive Wegsensor 29" umfasst eine einzelne Kondensatorplatte 80, die an einem der Plattenelemente 13, 14 befestigt ist. Am anderen Plattenelement 13, 14 ist eine Anordnung von zwei mal zwei Kondensatorplatten 81 befestigt. Die einzelnen Kondensatorplatte 81 dieser Anordnung bilden zusammen mit der einzelnen Kondensatorplatte 80 jeweils einen Kondensator. Eine relative Verschiebung der Kondensatorplatte 80 gegenüber der Anordnung von Kondensatorplatten 81 ändert die Kapazität der so gebildeten Kondensatoren, was elektrisch messbar ist. Aufgrund der rasterartigen Anordnung mehrerer Kondensatorplatten 81 kann in einfacher Weise zwischen verschiedenen Verschieberichtungen unterschieden werden. Auch eine Änderung des Plattenabstands bewirkt eine messbare Kapazitätsänderung. Zur Erhöhung der Genauigkeit könnte die Anordnung von Kondensatorplatten 81 auch mehr als vier, beispielsweise drei mal drei oder vier mal vier, Kondensatorplatten 81 umfassen.

Die Erfindung ermöglicht mit einfachen Mitteln ein effektives Ertasten von Objekten mittels Objektgreifern und eine darauf beruhende Optimierung der Greifersteuerung.

Eine in den Figuren nicht dargestellte Ausführungsform der Erfindung sieht vor, dass ein wie vorstehend beschriebenes und dargestelltes Sensorsystem 11, 11' in ein führerloses Transportfahrzeug integriert ist, um den Transport zu überwachen und ein Verrutschen oder Kippen der zu transportierenden Objekte zu verhindern. Hierbei ist das erste Plattenelement 13 auf einer Objektauflagefläche oder an einem Grundrahmen des Fahrzeugs befestigt, während das zweite Plattenelement 14, 14' für einen direkten oder indirekten Kontakt mit dem zu transportierenden Objekt vorgesehen ist. Vorzugsweise ist dabei das taktile Sensorsystem 11, 11' derart angeordnet und ausgestaltet, dass eine während des Transports auf ein transportiertes Objekt wirkende Fliehkraft ermittelbar ist. Die Geschwindigkeit des Fahrzeugs kann anhand der ermittelten Fliehkraft angepasst werden, um ein Verrutschen oder Kippen des Objekts zu vermeiden.

### Bezugszeichenliste:

- 11, 11': taktiles Sensorsystem
- 13: Plattenelement
- 14, 14': Plattenelement
- 15: elastisches Verbindungselement
- 17, 17', 17": Innenfläche
- 19: Außenfläche
- 20, 20': Klebstoffschicht
- 21: Ausnehmung
- 25: Aussparung
- 27: Hohlraum
- 29, 29', 29": Wegsensor
- 33,33': Lichtsender
- 35,35': Lichtempfänger
- 37: Lichtstrahlenbündel
- 40: Empfangsfläche
- 44: optische Achse
- 50: Reflektor
- 51: Sendelichtstrahlen
- 52: Empfangslichtstrahlen
- 55: Spiegelfläche
- 57: Lichtaustrittsfläche
- 59: Fotodiodenfläche
- 60: Partikel
- 65: Objektgreifer
- 67: Greifelement
- 69: Objekt
- 70,71: Lichtfleck

## Patentansprüche

1. Taktiles Sensorsystem (11, 11'), das umfasst:
ein erstes Plattenelement (13) mit einer Außenfläche (19) und einer entgegengesetzten Innenfläche (17, 17', 17"),
ein zweites Plattenelement (14, 14') mit einer Außenfläche (19) und einer entgegengesetzten Innenfläche (17, 17', 17"),
wobei die Außenfläche (19) des ersten Plattenelements (13) zur Befestigung an einer Objekthandhabungseinheit (65) ausgebildet ist und die Außenfläche (19) des zweiten Plattenelements (14, 14') für einen direkten oder indirekten Kontakt mit einem Objekt (69) vorgesehen ist,
und wobei die Innenfläche (17, 17', 17") des ersten Plattenelements (13) über wenigstens ein elastisches Verbindungselement (15) mit der Innenfläche (17, 17', 17") des zweiten Plattenelements (14, 14') verbunden ist,
wobei das Sensorsystem (11,11') wenigstens einen Wegsensor (29, 29', 29") zum Erfassen einer Verschiebung und/oder einer Drehung des zweiten Plattenelements (14, 14') relativ zum ersten Plattenelement (13) umfasst.

2. Sensorsystem nach Anspruch 1,
**dadurch gekennzeichnet, dass**
zwischen dem ersten Plattenelement (13) und dem zweiten Plattenelement (14, 14') ein Freiraum gebildet ist und der Wegsensor (29, 29', 29") wenigstens teilweise in dem Freiraum angeordnet ist.

3. Sensorsystem nach Anspruch 1 oder 2,
**dadurch gekennzeichnet, dass**
in dem ersten Plattenelement (13) und/oder in dem zweiten Plattenelement (14, 14') eine Aussparung (25) gebildet ist und der Wegsensor (29, 29', 29") wenigstens teilweise in der Aussparung (25) angeordnet ist.

4. Sensorsystem nach zumindest einem der vorstehenden Ansprüche,
**dadurch gekennzeichnet, dass**
das elastische Verbindungselement (15) bezüglich mehrerer Richtungen elastisch ist, insbesondere wobei das elastische Verbindungselement (15) ein richtungsabhängiges Elastizitätsmodul aufweist.

5. Sensorsystem nach zumindest einem der vorstehenden Ansprüche,
**dadurch gekennzeichnet, dass**
das Sensorsystem (11, 11') eine elektronische Steuereinrichtung umfasst, die mit dem Wegsensor (29, 29', 29") in Signalverbindung steht und dazu ausgebildet ist, anhand der von dem Wegsensor (29, 29', 29") erfassten Verschiebung und/oder Drehung des zweiten Plattenelements (14, 14') relativ zum ersten Plattenelement (13) wenigstens eine taktile Kenngröße zu ermitteln, welche einen Objekthandhabungsvorgang der Objekthandhabungseinheit (65) charakterisiert.

6. Sensorsystem nach zumindest einem der vorstehenden Ansprüche,
**dadurch gekennzeichnet, dass**
der Wegsensor (29, 29') ein optoelektronischer Sensor ist.

7. Sensorsystem nach Anspruch 6,
**dadurch gekennzeichnet, dass**
der Wegsensor (29) einen an dem ersten oder dem zweiten Plattenelement (13, 14, 14') angeordneten Lichtsender (33) und einen an dem jeweils anderen Plattenelement (13, 14, 14') angeordneten Lichtempfänger (35) umfasst.

8. Sensorsystem nach Anspruch 6,
**dadurch gekennzeichnet, dass**
der Wegsensor (29') einen an dem ersten oder dem zweiten Plattenelement (13, 14, 14') angeordneten Lichtsender (33'), einen an dem betreffenden Plattenelement (13, 14, 14') angeordneten Lichtempfänger (35') und einen an dem jeweils anderen Plattenelement (13, 14, 14') angeordneten Reflektor (50) umfasst.

9. Sensorsystem nach einem der Ansprüche 6 bis 8,
**dadurch gekennzeichnet, dass**
der Lichtsender (33, 33') zum Aussenden mehrerer separater Lichtstrahlen oder Lichtstrahlenbündel (37) ausgebildet ist und/oder dass
der Lichtsender (33, 33') zum Aussenden wenigstens eines konvergenten oder divergenten Lichtstrahlenbündels (37) ausgebildet ist und/oder dass der Lichtsender (33, 33') zum Aussenden eines strukturierten Lichtstrahlenbündels (37) ausgebildet ist.

10. Sensorsystem nach einem der Ansprüche 6 bis 9,
**dadurch gekennzeichnet, dass**
der Lichtsender (33) derart ausgebildet und angeordnet ist, dass wenigstens eine Strahlachse eines auszusendenden Lichtstrahls oder Lichtstrahlenbündels (37) schräg bezüglich einer Normalenebene des ersten Plattenelements (13, 14, 14') und/oder des zweiten Plattenelements (13, 14, 14') verläuft.

11. Sensorsystem nach zumindest einem der vorstehenden Ansprüche,
**dadurch gekennzeichnet, dass**
das erste Plattenelement (13, 14, 14') unter Ausbildung einer elastischen Klebeverbindung mit dem zweiten Plattenelement (13, 14, 14') verklebt ist.

12. Sensorsystem nach zumindest einem der vorstehenden Ansprüche,
**dadurch gekennzeichnet, dass**
die Innenfläche (17) des ersten Plattenelements (13) wenigstens abschnittsweise schräg zur Innenfläche (17') des zweiten Plattenelements (14') verläuft oder dass die Innenfläche (17, 17') des ersten Plattenelements oder des zweiten Plattenelements (13, 14, 14') zu der Innenfläche des jeweils anderen Plattenelements hin gewölbt ist.

13. Sensorsystem nach zumindest einem der vorstehenden Ansprüche,
**dadurch gekennzeichnet, dass**
wenigstens ein weiterer Wegsensor (29, 29', 29"), ein Beschleunigungssensor, ein Lagesensor, ein Temperatursensor und/oder ein Feuchtigkeitssensor in das Sensorsystem (11,11') integriert ist/sind.

14. Roboter mit einer beweglichen oder unbeweglichen Basis, einer Kinematik und einem an der Kinematik angeordneten Objektgreifer (65), der wenigstens zwei Greifelemente (67) umfasst, die aufeinander zu und voneinander weg bewegbar sind, um ein Objekt (69) wahlweise zu greifen und freizugeben,
**dadurch gekennzeichnet, dass**
in wenigstens eines der Greifelemente (67) ein taktiles Sensorsystem (11, 11') nach einem der vorstehenden Ansprüche integriert ist.

15. Transportsystem zum Befördern von Objekten (69), die in einem Ladebereich des Transportsystems abgelegt sind,
**dadurch gekennzeichnet, dass**
an oder in dem Ladebereich ein taktiles Sensorsystem nach einem der Ansprüche 1 bis 13 vorgesehen ist.
